# EUROPEAN PATENT APPLICATION

(11) **EP 3 640 955 A1**
(43) Date of publication of application: **22.04.2020**
(21) Application number: 18817513.7
(22) Date of filing: 15.06.2018
(51) Int. Cl.: H01B 7/02, C08G 73/10, C09D 179/08, H01B 3/30

(54) **INSULATED ELECTRIC WIRE**

(30) Priority: 16.06.2017 JP 2017119039; 16.06.2017 JP 2017119040
(71) Applicant: Sumitomo Electric Industries, Ltd., Osaka-shi, Osaka 541-0041 (JP); Sumitomo Electric Wintec, Inc., Koka-shi, Shiga 529-1811 (JP)
(72) Inventor: MAEDA, Shuhei, Osaka-shi Osaka 541-0041 (JP); YAMAUCHI, Masaaki, Osaka-shi Osaka 541-0041 (JP); OTA, Shinya, Osaka-shi Osaka 541-0041 (JP); SAITO, Hideaki, Osaka-shi Osaka 541-0041 (JP); TAMURA, Yasushi, Koka-shi Shiga 529-1811 (JP); YOSHIDA, Kengo, Koka-shi Shiga 529-1811 (JP); HOMMA, Shigenori, Koka-shi Shiga 529-1811 (JP)
(74) Representative: Boult Wade Tennant LLP
(86) International application number: PCT/JP2018/022922
(87) International publication number: WO 2018/230706

(57) **Abstract**

An insulated electric wire 11 includes a linear conductor 12 and an insulating film 14 disposed to surround the periphery 13 of the conductor 12. The insulating film 14 includes a polyimide layer formed of a polyimide that has a molecular structure including a PMDA-ODA-type repeating unit A and a BPDA-ODA-type repeating unit B, the mole fraction [B x 100/(A + B)] (% by mole) represented by the percentage of the number of moles of the repeating unit B to the total number of moles of the repeating unit A and the repeating unit B being 25% or more by mole and 95% or less by mole. The polyimide layer has a plurality of pores 15. The pores 15 occupy 5% or more by volume and 80% or less by volume of the polyimide layer.

## Description

### Technical Field

The present disclosure relates to an insulated electric wire. The present application claims the priority of Japanese Patent Application No. 2017-119039, filed June 16, 2017 and Japanese Patent Application No. 2017-119040, filed June 16, 2017, which are incorporated herein by reference in their entirety.

### Background Art

Patent Literature 1 describes an insulated electric wire including an insulating layer formed of a polyimide.

### Citation List

### Patent Literature

PTL 1: Japanese Unexamined Patent Application Publication No. 2013-253124

### Summary of Invention

### Means for Solving the Problems

An insulated electric wire according to the present disclosure includes a linear conductor and an insulating film disposed to surround the periphery of the conductor. The insulating film includes a polyimide layer formed of a polyimide that has a molecular structure including a repeating unit A represented by the following formula (1) and 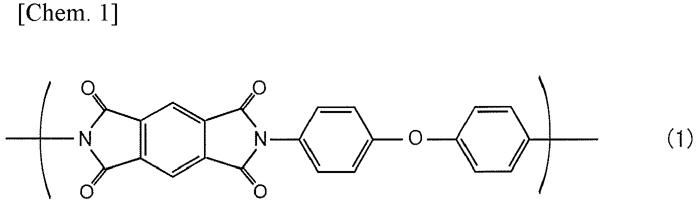 a repeating unit B represented by the following formula (2), and 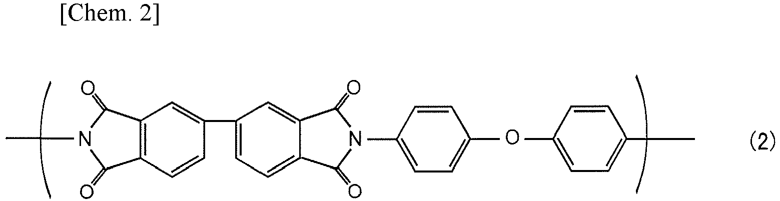 the mole fraction [B x 100/(A + B)] (% by mole) represented by the percentage of the number of moles of the repeating unit B to the total number of moles of the repeating unit A and the repeating unit B is 25% or more by mole and 95% or less by mole. The polyimide layer has a plurality of pores. The pores occupy 5% or more by volume and 80% or less by volume of the polyimide layer.

### Brief Description of Drawings

[Fig. 1] Figure 1 is a cross-sectional view of the structure of an insulated electric wire according to a first embodiment and is a cross-sectional view of a cross section of a linear insulated electric wire perpendicular to the longitudinal direction.
[Fig. 2] Figure 2 is a fragmentary cross-sectional view of the structure of the insulated electric wire according to the first embodiment and is a fragmentary cross-sectional view of a cross section of a linear insulated electric wire parallel to the longitudinal direction.
[Fig. 3] Figure 3 is a flow chart of the steps in a process of producing the insulated electric wire according to the first embodiment.
[Fig. 4] Figure 4 is a fragmentary cross-sectional view of a cross section of an insulated electric wire according to a second embodiment parallel to the longitudinal direction.
[Fig. 5] Figure 5 is a fragmentary cross-sectional view of a cross section of an insulated electric wire according to a third embodiment parallel to the longitudinal direction.
[Fig. 6] Figure 6 is a fragmentary cross-sectional view of a cross section of an insulated electric wire according to a fourth embodiment parallel to the longitudinal direction.
[Fig. 7] Figure 7 is a cross-sectional view of the structure of an insulated electric wire according to a fifth embodiment and is a cross-sectional view of a cross section of a linear insulated electric wire perpendicular to the longitudinal direction.
[Fig. 8] Figure 8 is a fragmentary cross-sectional view of the structure of the insulated electric wire according to the fifth embodiment and is a fragmentary cross-sectional view of a cross section of a linear insulated electric wire parallel to the longitudinal direction.
[Fig. 9] Figure 9 is a flow chart of the steps in a process of producing the insulated electric wire according to the fifth embodiment.
[Fig. 10] Figure 10 is a schematic view of a method for evaluating resistance to welding.

### Description of Embodiments

### [Problems to be Solved by Present Invention]

An insulated electric wire is sometimes welded at its end portion. In welding, heat tends to be transferred to an insulating film serving as an insulating layer, particularly an inner layer, that is, a layer near a conductor. An insulating film formed of a resin with a low glass transition temperature (for example, approximately 270°C) has a decreased elastic modulus during welding. Thus, a minute amount of water in the insulating film may expand in the insulating film during welding and form bubbles. Such unexpected bubbling unfavorably impairs the function of the insulating film.

Accordingly, one object is to provide an insulated electric wire that can prevent the function from being impaired.

### [Advantageous Effects of Present Disclosure]

The present disclosure can provide an insulated electric wire that can prevent the function from being impaired.

### [Description of Embodiments of Present Disclosure]

Embodiments of the present disclosure are described below. An insulated electric wire according to the present disclosure includes a linear conductor and an insulating film disposed to surround the periphery of the conductor. The insulating film includes a polyimide layer formed of a polyimide that has a molecular structure including a repeating unit A represented by the following formula (1) and 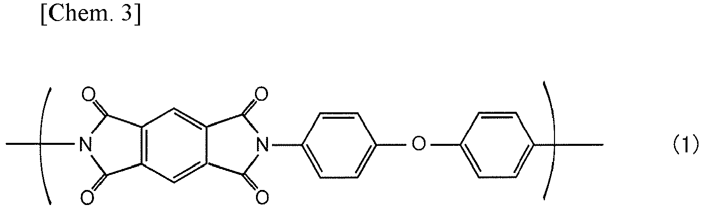 a repeating unit B represented by the following formula (2), and 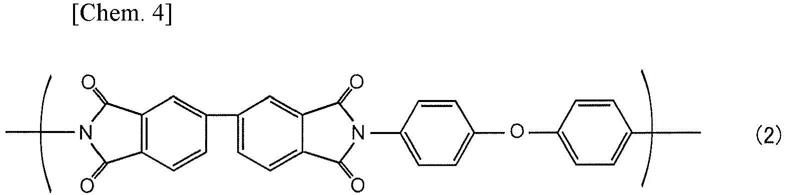 the mole fraction [B x 100/(A + B)] (% by mole) represented by the percentage of the number of moles of the repeating unit B to the total number of moles of the repeating unit A and the repeating unit B is 25% or more by mole and 95% or less by mole. The polyimide layer has a plurality of pores. The pores occupy 5% or more by volume and 80% or less by volume of the polyimide layer.

With an increase in applications of electrical and electronic components, insulated electric wires are increasingly used in severer environments than before. Accordingly, there is a demand for an insulated electric wire including an insulating film with higher durability than existing insulated electric wires. For example, insulated electric wires are also used in a severe environment, such as in a high temperature and high humidity environment. In such a case, some imide groups may be hydrolyzed when exposed to a high temperature and high humidity environment for extended periods. A severe, high temperature and high humidity environment may significantly decrease the molecular weight, cause a crack, and impair the function of the insulating layer. Thus, there is a demand for an insulated electric wire including an insulating film with less degradation even when exposed to a high temperature and high humidity environment for extended periods (with high resistance to hygrothermal degradation).

A polyimide constituting an insulating film in an insulated electric wire according to the present disclosure contains as a constitutional unit of the polyimide a PMDA-ODA-type repeating unit A composed of pyromellitic dianhydride (PMDA) and 4,4'-diaminodiphenyl ether (ODA, 4,4'-oxydianiline, 4,4'-ODA)) and as a constitutional unit of the polyimide a BPDA-ODA-type repeating unit B composed of 3,3',4,4'-biphenyltetracarboxylic dianhydride (BPDA) and ODA at a predetermined ratio. The investigation of the present inventors showed that such a polyimide suffers less degradation than a PMDA-ODA-type polyimide composed only of the repeating unit A even when exposed to a high temperature and high humidity environment for extended periods. More specifically, the hydrolysis resistance of an insulating film including a polyimide layer in a high temperature and high humidity environment is improved when the mole fraction [B x 100/(A + B)] (% by mole) represented by the percentage of the number of moles of the repeating unit B to the total number of moles of the repeating unit A and the repeating unit B in the polyimide is 25% or more by mole. For a good appearance of the polyimide layer, more specifically, to avoid color variability or a cloudy appearance, the mole fraction can be 95% or less by mole.

On the basis of the investigation of the present inventors, the polyimide layer has a plurality of pores to improve the resistance to welding of the polyimide layer. The pores occupy 5% or more by volume and 80% or less by volume of the polyimide layer. Pores occupying such a volume percentage in the polyimide layer can improve heat-insulating properties in the polyimide layer and improve resistance to welding without impairing bending workability. More specifically, pores occupying 5% or more by volume of the polyimide layer can reduce heat transfer in the polyimide layer, improve heat-insulating properties, and suppress bubbling in the polyimide layer during welding. Pores occupying 80% or less by volume of the polyimide layer can prevent cracking in the insulated electric wire and maintain good bending workability.

The insulated electric wire may have a shell surrounding the pores. Such a structure can prevent the pores from communicating with each other and becoming larger than necessary and reduce variations in the size of pores. Such a structure also makes it easy for the pores to account for the above percentage of the polyimide layer. More specifically, because the pores within the shell have a predetermined volume, the amount of the shell having the above structure in the polyimide layer can be changed to adjust the percentage of the pores in the polyimide layer.

The shell preferably has a higher elastic modulus than the polyimide. This can increase the hardness of the insulating film including the shell and reduce the decrease in the elastic modulus of the insulating film itself including the shell even at high temperatures.

In an insulated electric wire according to the present disclosure, the insulating film may include a first layer that is in contact with the periphery of the conductor and that covers the periphery of the conductor. The polyimide layer may constitute a second layer disposed to surround the periphery of the first layer. In such a case, the first layer may contain a resin with a storage modulus E' of 200 MPa or more at 325°C.

The insulating film may include a first layer that is in contact with the periphery of the conductor and that covers the periphery of the conductor. The polyimide layer may constitute a second layer disposed to surround the periphery of the first layer. Thus, the insulating film includes at least two layers: the first layer disposed near the conductor and the second layer disposed away from the conductor. Such a structure allows each layer of the insulating film to have its desired characteristics.

Among the layers in the insulating film, the first layer constitutes a lower layer near the conductor. The investigation of the present inventors shows that the first layer preferably contains a resin with a storage modulus E' of 200 MPa or more at 325°C. This improves the resistance to welding of the insulating film. In welding, heat tends to be transferred to the first layer of the insulating film that is in contact with the periphery of the conductor and that covers the periphery of the conductor. Such a structure can suppress bubbling in the resin constituting the first layer and improve resistance to welding.

The second layer disposed to surround the periphery of the first layer may be composed of the polyimide layer. Among the layers in the insulating film, the second layer constitutes an upper layer far from the conductor. As described above, the polyimide layer contains as a constitutional unit of the polyimide the PMDA-ODA-type repeating unit A composed of PMDA and ODA and as a constitutional unit of the polyimide the BPDA-ODA-type repeating unit B composed of BPDA and ODA at a predetermined ratio. The investigation of the present inventors showed that such a polyimide suffers less degradation than a PMDA-ODA-type polyimide composed only of the repeating unit A even when exposed to a high temperature and high humidity environment for extended periods. More specifically, the hydrolysis resistance of an insulating film including a polyimide layer in a high temperature and high humidity environment is improved when the mole fraction [B x 100/(A + B)] (% by mole) represented by the percentage of the number of moles of the repeating unit B to the total number of moles of the repeating unit A and the repeating unit B in the polyimide is 25% or more by mole. For a good appearance of the polyimide layer, more specifically, to avoid a cloudy appearance, the mole fraction can be 95% or less by mole. Thus, the upper layer formed of such a polyimide far from the conductor can provide an insulated electric wire that can maintain its good appearance as well as high hydrolysis resistance.

Thus, in an insulating film of an insulated electric wire according to the present application, a resin constituting a first layer in contact with the periphery of a conductor has a storage modulus E' of 200 MPa or more at 325°C to ensure resistance to welding. A second layer in contact with the periphery of the first layer is formed of a polyimide in which the mole fraction [B x 100/(A + B)] (% by mole) is 25% or more by mole and 95% or less by mole to ensure high hydrolysis resistance and a good appearance. An insulated electric wire including such an insulating film can prevent the function from being impaired.

The resin in the first layer may contain at least one of poly ether ether ketone, polyamideimide, and polyimide having a molecular structure including the repeating unit A. Such a resin enables the first layer to easily have a storage modulus E' of 200 MPa or more at 325°C.

The second layer may have a thickness of 20 µm or more. This minimizes damage to the first layer from hydrolysis and easily reduces the occurrence of cracking starting from the first layer.

The resin in the first layer may have a storage modulus E' of 20000 MPa (20 GPa) or less at 325°C. Such a resin can be used to maintain good bending workability required for insulated electric wires.

### [Details of Embodiments of Present Disclosure]

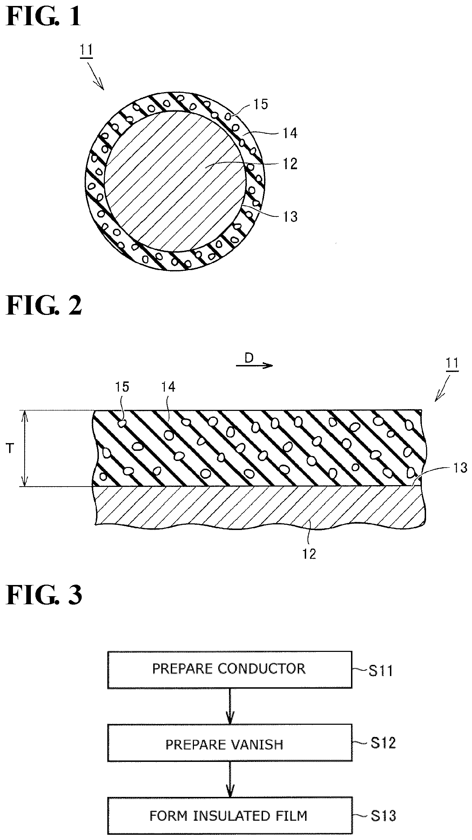

An insulated electric wire according to an embodiment of the present disclosure is described below with reference to Figures 1 and 2. In the drawings, identical or corresponding portions are denoted by the same reference numerals and will not be described again.

### (First Embodiment)

Figures 1 and 2 are cross-sectional views of the structure of an insulated electric wire according to a first embodiment, which is an embodiment of the present disclosure. Figure 1 illustrates a cross section of a linear insulated electric wire perpendicular to the longitudinal direction. Figure 2 illustrates a cross section of a linear insulated electric wire parallel to the longitudinal direction. In Figure 2, the arrow D indicates an orientation in the longitudinal direction.

In Figures 1 and 2, an insulated electric wire 11 includes a linear conductor 12 and an insulating film 14 disposed to surround the periphery 13 of the conductor 12.

For example, the conductor 12 is preferably formed of a metal with high electric conductivity and high mechanical strength. Examples of such a metal include copper, copper alloys, aluminum, aluminum alloys, nickel, silver, soft iron, steel, and stainless steel. The conductor 12 may be formed of a linearly formed material of one of these metals or a multilayer structure produced by covering such a linear material with another metal, for example, a nickel-coated copper wire, a silver-coated copper wire, a copper-coated aluminum wire, or a copper-coated steel wire.

The conductor 12 may have any diameter depending on the use. Although the conductor 12 and the insulated electric wire 11 have a circular cross-sectional shape in Figure 1, the conductor 12 and the insulated electric wire 11 may have any cross-sectional shape, provided that the conductor 12 is linear. For example, with respect to a cross section perpendicular to the longitudinal direction, the conductor 12 with a rectangular or polygonal cross-sectional shape may substitute for the linear conductor 12 with a circular cross-sectional shape.

The insulating film 14 is disposed to surround the periphery 13 of the conductor 12. More specifically, the insulating film 14 is in contact with the periphery 13 of the conductor 12 and entirely covers the periphery 13 of the conductor 12. The insulating film 14 may have a thickness of 10 µm or more and 200 µm or less, for example.

The insulating layer constituting at least part of the insulating film 14 is formed of a polyimide having a molecular structure containing the repeating unit A represented by the formula (1) and the repeating unit B represented by the formula (2). The mole fraction [B x 100/(A + B)] (% by mole) represented by the percentage of the number of moles of the repeating unit B to the total number of moles of the repeating unit A and the repeating unit B in the molecular structure is 25% or more by mole and 95% or less by mole.

Hydrolysis of the polyimide is partly responsible for a fissure or crack in the insulating film 14. The repeating unit B content is preferably appropriately increased to improve the hydrolysis resistance of the polyimide. However, an excessive repeating unit B content results in cloudiness of the insulating film 14 and consequently cloudiness of the insulated electric wire 11. The insulated electric wire 11 requires a good appearance, such as an appearance without cloudiness. The mole fraction in the above range results in the insulating film 14 with high hydrolysis resistance and a good appearance when exposed to a high temperature and high humidity environment for extended periods.

The insulating film 14 has a plurality of pores 15. The pores 15 are separated from each other. The pores 15 occupy 5% or more by volume and 80% or less by volume of the insulating film 14.

Such a structure can improve heat-insulating properties in the polyimide layer and improve resistance to welding without impairing bending workability. More specifically, pores occupying 5% or more by volume of the polyimide layer can reduce heat transfer in the polyimide layer, improve heat-insulating properties, and suppress bubbling in the polyimide layer during welding. Pores occupying 80% or less by volume of the polyimide layer can prevent cracking in the insulated electric wire 11 and maintain good bending workability. Thus, the insulated electric wire 11 can prevent the function from being impaired.

Next, the steps in a method for producing the insulated electric wire 11 according to the present embodiment are described below with reference to Figures 1 to 3. Figure 3 is a flow chart of the steps in a process of producing the insulated electric wire 11 according to an embodiment of the present application. In the present embodiment, a series of steps S11 to S13 ("step" is hereinafter omitted) in Figure 3 are performed.

First, the linear conductor 12 is prepared (S11). More specifically, a unit wire is prepared, and the unit wire is subjected to processing, such as drawing (wire drawing), to prepare the conductor 12 with a desired diameter and shape. The unit wire is preferably formed of a metal with high electric conductivity and high mechanical strength. Examples of such a metal include copper, copper alloys, aluminum, aluminum alloys, nickel, silver, soft iron, steel, and stainless steel. The conductor 12 of the insulated electric wire 11 may be formed of a linearly formed material of one of these metals or a multilayer structure produced by covering such a linear material with another metal, for example, a nickel-coated copper wire, a silver-coated copper wire, a copper-coated aluminum wire, or a copper-coated steel wire.

The average cross-sectional area of the conductor 12 preferably has a lower limit of 0.01 mm², more preferably 1 mm². The average cross-sectional area of the conductor 12 preferably has an upper limit of 10 mm², more preferably 5 mm². When the average cross-sectional area of the conductor 12 is smaller than the lower limit, the insulated electric wire 11 may have higher resistance than necessary. When the average cross-sectional area of the conductor 12 is larger than the upper limit, the insulated electric wire 11 may have a larger diameter than necessary.

Next, a varnish containing a polyimide precursor poly(amic acid) (poly(amic acid) solution) is prepared (S12) (a varnish to form a porous layer is hereinafter also referred to as a "porous-layer-forming varnish"). A polyimide precursor, which is a raw material of the polyimide, is a polymer that forms the polyimide by imidization, and is a reaction product produced by polymerization between tetracarboxylic dianhydrides PMDA and BPDA and a diamine ODA. Thus, the raw materials of the polyimide precursor are PMDA, BPDA, and ODA.

The lower limit of the PMDA content per 100% by mole of the tetracarboxylic dianhydrides used as raw materials of the polyimide precursor is preferably 5% by mole, more preferably 8% by mole. The upper limit of the PMDA content is preferably 45% by mole, more preferably 20% by mole. A PMDA content lower than the lower limit may result in insufficient heat resistance of the insulating film 14 constituting the insulating layer in some applications. A PMDA content higher than the upper limit may result in insufficient introduction of a BPDA-derived structure into the main component polyimide of the insulating layer and may result in insufficient resistance to hygrothermal degradation of the insulating layer.

A diamine used as a raw material of the polyimide precursor is ODA. ODA can be used to improve the tenacity of the insulating layer.

The mole ratio (tetracarboxylic dianhydrides/diamine) of the tetracarboxylic dianhydrides (PMDA and BPDA) to the diamine (ODA) in the polyimide precursor can be 95/105 or more and 105/95 or less, for example, from the perspective of ease with which the polyimide precursor can be synthesized.

The weight-average molecular weight of the polyimide precursor preferably has a lower limit of 10,000, more preferably 15,000. The weight-average molecular weight preferably has an upper limit of 180,000, more preferably 130,000. The polyimide precursor with a weight-average molecular weight greater than or equal to the lower limit can form an extensible polyimide that can easily retain a constant molecular weight even after hydrolysis. Consequently, the flexibility and resistance to hygrothermal degradation of the insulating layer can be further improved. The polyimide precursor with a weight-average molecular weight smaller than or equal to the upper limit can suppress an extreme increase in the viscosity of a varnish for use in the production of the insulated electric wire 11 and improve the coating performance of the varnish on the conductor 12. Furthermore, the concentration of the polyimide precursor in the varnish can be easily increased while good coating performance is maintained. The term "weight-average molecular", as used herein, refers to the value measured by gel permeation chromatography (GPC) according to JIS-K725-1: 2008 "Plastics -Determination of average molecular mass and molecular mass distribution of polymers using size-exclusion chromatography - Part 1: General principles".

The polyimide precursor can be produced by a polymerization reaction between the tetracarboxylic dianhydride(s) and the diamine. The polymerization reaction can be performed by a known method for synthesizing a polyimide precursor. In the present embodiment, first, 100% by mole of the diamine ODA is dissolved in N-methyl-2-pyrrolidone (NMP). 95% by mole to 100% by mole of tetracarboxylic dianhydrides composed of PMDA and BPDA at a predetermined ratio are then added and stirred in a nitrogen atmosphere. The reaction is then performed at 80°C for 3 hours while stirring. After the reaction, the reaction solution is naturally cooled to room temperature. Thus, a varnish containing the polyimide precursor dissolved in N-methyl-2-pyrrolidone is prepared.

The porous-layer-forming varnish contains a thermally decomposable resin, which decomposes when heated. The thermally decomposable resin is adequately dispersed in the varnish. Thus, the porous-layer-forming varnish applied in the present embodiment is a polyimide precursor containing a mixture of a polyimide precursor and a thermally decomposable resin in an organic solvent. A portion in which the thermally decomposable resin is located becomes a pore. Instead of the thermally decomposable resin or in addition to the thermally decomposable resin, core-shell particles may be used that have an outer shell and a thermally decomposable resin enclosed in the shell. The core-shell particles have a shell around the thermally decomposable resin (core), the shell having a higher thermal decomposition temperature than the thermally decomposable resin. When a varnish containing the core-shell particles is heated, only the core is thermally decomposed and forms a pore, and the shell remains around the pore.

For example, the thermally decomposable resin is resin particles that are thermally decomposed at a temperature lower than the baking temperature of the polyimide. The baking temperature of the polyimide depends on the resin type and is typically approximately 200°C or more and approximately 600°C or less. Thus, the thermal decomposition temperature of the thermally decomposable resin preferably has a lower limit of 200°C and an upper limit of 400°C. The thermal decomposition temperature refers to a temperature at which the mass loss rate is 50% when heated from room temperature at 10°C/min in an air atmosphere. For example, the thermal decomposition temperature can be measured by measuring a thermogravimetric value with a thermogravimetry-differential thermal analysis system ("TG/DTA" manufactured by SII NanoTechnology Inc.).

Examples of the thermally decomposable resin used in the core of the core-shell particles include, but are not limited to, compounds in which one or both ends or a portion of poly(ethylene glycol) or poly(propylene glycol) is alkylated, (meth)acrylated, or epoxidized, polymers of (meth)acrylates with an alkyl group having 1 or more and 6 or less carbon atoms, such as poly(methyl (meth)acrylate), poly(ethyl (meth)acrylate), poly(propyl (meth)acrylate), and poly(butyl (meth)acrylate), urethane oligomers, urethane polymers, modified (meth)acrylate polymers, such as urethane (meth)acrylates, epoxy (meth)acrylates, and ε-caprolactone (meth)acrylates, poly((meth)acrylic acid), cross-linked products thereof, polystyrene, and cross-linked polystyrene. Among these, polymers of (meth)acrylates with an alkyl group having 1 or more and 6 or less carbon atoms are preferred because they are easily thermally decomposed at the baking temperature of the main polymer and can easily form pores in the insulating layer. Examples of such (meth)acrylate polymers include poly(methyl methacrylate) (PMMA). A thermally decomposable resin for use in the shell of the core-shell particles may be any material that has a higher thermal decomposition temperature of the thermally decomposable resin for use in the core. Examples of the thermally decomposable resin for use in the shell include polystyrene, silicone, fluoropolymer, and polyimide. Among these, silicone is preferred. The shell composed mainly of silicone has high elasticity and tends to have improved insulating properties and heat resistance. Consequently, closed pores of hollow particles can be more easily maintained.

Although N-methyl-2-pyrrolidone (NMP) is used as an organic solvent in the embodiment, another aprotic polar organic solvent may also be used. Examples of the other aprotic polar organic solvent include N,N-dimethylformamide, N,N-dimethylacetamide, dimethyl sulfoxide, and γ-butyrolactone. These organic solvents may be used alone or in combination. The term "aprotic polar organic solvent", as used herein, refers to a polar organic solvent that has no proton-release group.

Any amount of the organic solvent may be used, provided that PMDA, BPDA, and ODA can be uniformly dispersed. For example, the amount of the organic solvent to be used may be 100 parts or more by mass and 1,000 parts or less by mass per 100 parts by mass of PMDA, BPDA, and ODA in total.

The polymerization reaction conditions may be appropriately determined depending on the raw materials to be used or the like. For example, the reaction temperature may be 10°C or more and 100°C or less, and the reaction time may be 0.5 hours or more and 24 hours or less.

The mole ratio (tetracarboxylic dianhydrides/diamine) of the tetracarboxylic dianhydrides (PMDA and BPDA) to the diamine (ODA) used in the polymerization is preferably closer to 100/100 in order to efficiently promote the polymerization reaction. For example, the mole ratio may be 95/105 or more and 105/95 or less.

The varnish may contain another component or additive agent in addition to the above components within the bounds of not reducing the above effects. For example, the varnish may contain various additive agents, such as a pigment, a dye, an inorganic or organic filler, a curing accelerator, a lubricant, an adhesion improver, and a stabilizer, and another compound, such as a reactive low-molecular-weight compound.

The conductor 12 is then covered with the insulating film 14 (S13). The insulating film 14 is formed to surround the periphery 13 of the linear conductor 12. First, the varnish prepared in S12 is applied to the surface of the conductor 12 to form a coating film on the periphery 13 of the conductor 12. The conductor 12 on which the coating film is formed is passed through a furnace heated to, for example, 350°C to 500°C for 20 seconds to 2 minutes, more specifically, for 30 seconds, for heating. Heating the coating film promotes imidization by dehydration of poly(amic acid), hardens the coating film, and forms the insulating film 14 of the polyimide on the periphery 13 of the conductor 12.

Heating the applied coating film volatilizes the organic solvent, dries the coating film, and promotes a reaction from the polyimide precursor to the polyimide. Because the polyimide is thermosetting, heating hardens the coating film. Heating also decomposes and vaporizes the thermally decomposable resin. The pores 15 are formed at portions in the polyimide hardened film in which the thermally decomposable resin is located.

The coating and heating cycle is performed multiple times (for example, 10 times) to increase the thickness of the insulating film 14. Consequently, the insulating film 14 can have a desired thickness T (for example, 35 µm or 100 µm) as illustrated in Figure 2. In this manner, the insulated electric wire 11 that includes the conductor 12 and the polyimide insulating film 14 disposed to surround the periphery 13 of the conductor 12 is produced.

In the above embodiment, the pores 15 can be formed not only by the method of utilizing the decomposition of the thermally decomposable resin but also by another method. For example, a phase separation method (a method of extracting and removing a solvent from a homogeneous solution of a polymer and a solvent after microphase separation to form pores) or a supercritical method (a method of utilizing a supercritical fluid to form a porous body) may be utilized, or hollow particles may be added to form the pores 15 in the insulating film 14.

Although the insulating film 14 is formed of a single insulating layer in the embodiment, the insulating film 14 may be formed of a plurality of insulating layers. Some embodiments (but not limited to these embodiments) of the insulating film 14 formed of a plurality of insulating layers are described below.

### (Second Embodiment)

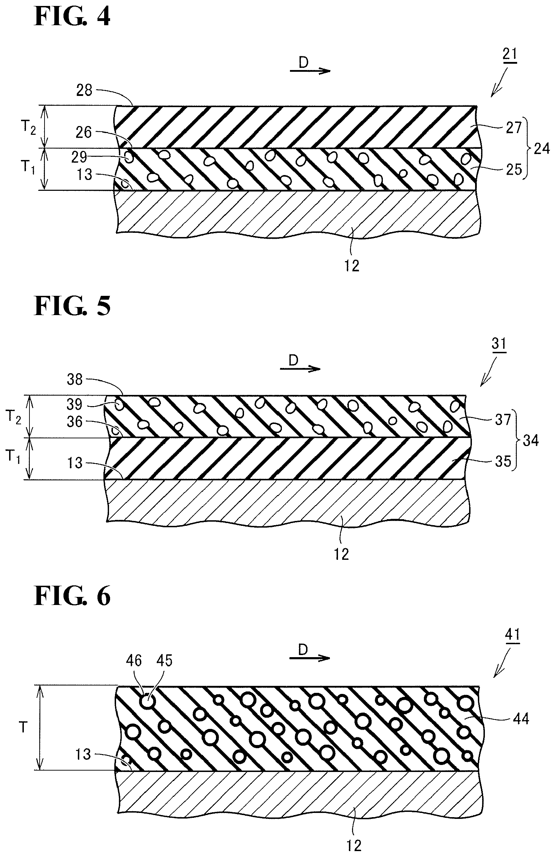

Next, another embodiment, a second embodiment, is described below with reference to Figure 4. Figure 4 is a fragmentary cross-sectional view of a portion of an insulated electric wire 21 according to the second embodiment. Figure 4 is a fragmentary cross-sectional view corresponding to Figure 2.

In Figure 4, the insulated electric wire 21 according to another embodiment of this disclosure includes a linear conductor 12 and an insulating film 24 disposed to surround the periphery 13 of the conductor 12. The insulating film 24 has a two-layer structure and includes a first layer 25 that is in contact with and covers the periphery 13 of the conductor 12 and a second layer 27 that is in contact with and covers the periphery 26 of the first layer 25. The first layer 25 is formed of the polyimide layer described above. The second layer 27 is formed of a polyimide solid layer. Thus, the insulated electric wire 21 includes, from the inner diameter side, the conductor 12, the first layer 25 formed of a polyimide porous layer, and the second layer 27 formed of a polyimide solid layer. The periphery 28 of the second layer 27, which is the outermost layer, is exposed to the air. The first layer 25 has a plurality of pores 29 described above. The pores 29 occupy 5% or more by volume and 80% or less by volume of the first layer 25 formed of a polyimide layer. Such a structure can further improve the resistance to welding of an inner layer that is required to have higher resistance to welding.

The insulated electric wire 21 is formed as described below. First, the linear conductor 12 is prepared in the same manner as in the step S11 according to the first embodiment (Figure 3). Next, a varnish is prepared in the same manner as in the step S12 according to the first embodiment (Figure 3). Two varnishes are prepared: a porous-layer-forming varnish to form the first layer 25 and a solid-layer-forming varnish to form the second layer 27.

The porous-layer-forming varnish is the same as the varnish used to form the insulating film 14 in the first embodiment. Thus, the porous-layer-forming varnish contains a polyimide precursor poly(amic acid) and a thermally decomposable resin. The poly(amic acid) in the porous-layer-forming varnish is a reaction product produced by polymerization between tetracarboxylic dianhydrides PMDA and BPDA and a diamine ODA. The poly(amic acid) is formulated such that the mole fraction (B x 100/(A + B)) represented by the percentage of the number of moles of the repeating unit B to the total number of moles of the repeating unit A represented by the formula (1) and the repeating unit B represented by the formula (2) is 25% or more by mole and 95% or less by mole.

On the other hand, the solid-layer-forming varnish may have any component and, for example, a solution of poly ether ether ketone, polyamideimide, and poly(amic acid), which is a precursor of a heat-resistant resin, such as a polyimide, having a molecular structure containing the repeating unit A, is used. For example, the raw materials for the solid-layer-forming varnish to form a polyimide having a molecular structure containing the repeating unit A are PMDA and ODA.

An insulating film 21 is then formed on the conductor 12. In the insulating film 21, first, the first layer 25 is formed to surround the periphery 13 of the linear conductor 12. The porous-layer-forming varnish is applied to the surface of the conductor 12 to form a coating film on the periphery 13 of the conductor 12. The conductor 12 on which the coating film is formed is passed through a furnace heated to, for example, 350°C to 500°C for 20 seconds to 2 minutes, more specifically, for 30 seconds, for heating.

Heating the applied coating film volatilizes the organic solvent, dries the coating film, and promotes a reaction from the polyimide precursor to the polyimide. Because the polyimide is thermosetting, heating hardens the coating film. Heating also decomposes and vaporizes the thermally decomposable resin. The pores 29 are formed at portions in the polyimide hardened film in which the thermally decomposable resin is located. The cycle of applying the porous-layer-forming varnish and heating the coating film is performed several times to increase the thickness of the first layer 25. Consequently, the first layer 25 has a desired thickness T₁.

The second layer 27 that is in contact with and covers the periphery 26 of the first layer 25 is then formed. In this case, the solid-layer-forming varnish is applied to the periphery 26 of the first layer 25 to form a coating film on the periphery 26 of the first layer 25. After the coating film is formed, the heating described above is performed to form the second layer 27. A cycle of applying the solid-layer-forming varnish and heating the coating film is performed several times to increase the thickness of the second layer 27. Consequently, the second layer 27 can have a desired thickness T₂ (for example, 35 µm). In this manner, the insulated electric wire 21 is produced that includes the conductor 12 and the insulating film 14 (including the first layer 25 and the second layer 27) disposed to surround the periphery of the conductor 12.

Although the first layer 25, that is, an inner layer near the conductor 12 includes the pores 29 in the embodiment illustrated in Figure 4, an outer layer may include a plurality of pores, as described in a third embodiment. The third embodiment is described below.

### (Third Embodiment)

Next, another embodiment, the third embodiment, is described below with reference to Figure 5. Figure 5 is a fragmentary cross-sectional view of a portion of an insulated electric wire 31 according to the second embodiment. Figure 5 is a fragmentary cross-sectional view corresponding to Figures 2 and 4.

In Figure 5, the insulated electric wire 31 according to the third embodiment includes the linear conductor 12 and an insulating film 34 disposed to surround the periphery 13 of the conductor 12. The insulating film 34 has a two-layer structure and includes a first layer 35 that is in contact with and covers the periphery 13 of the conductor 12 and a second layer 37 that is in contact with and covers the periphery 36 of the first layer 35. The first layer 35 is formed of a polyimide solid layer. The second layer 37 is formed of the polyimide layer described above. Thus, the insulated electric wire 31 includes, from the inner diameter side, the conductor 12, the first layer 35 formed of a polyimide solid, and the second layer 37 formed of a polyimide porous layer. The periphery 38 of the second layer 37, which is the outermost layer, is exposed to the air. The second layer 37 has a plurality of pores 39 described above. The pores 39 occupy 5% or more by volume and 80% or less by volume of the second layer 37 formed of a polyimide layer.

The insulated electric wire 31 according to the third embodiment can be produced by exchanging the order of the application of the porous-layer-forming varnish and the application of the solid-layer-forming varnish in the second embodiment. More specifically, the solid-layer-forming varnish can be used to form the first layer 35, and the porous-layer-forming varnish can be used to form the second layer 37, thus forming the insulating film 34. Such a structure can improve heat-insulating properties in the polyimide layer and improve resistance to welding without impairing bending workability.

### (Fourth Embodiment)

Next, another embodiment, a fourth embodiment, is described below with reference to Figure 6. Figure 6 is a fragmentary cross-sectional view of a portion of an insulated electric wire 41 according to the fourth embodiment. Figure 6 corresponds to fragmentary cross sections illustrated in Figures 2, 4, and 5.

In Figure 6, the insulated electric wire 41 according to the fourth embodiment includes the linear conductor 12, an insulating film 44 that is disposed to surround the periphery 13 of the conductor 12 and is formed of the polyimide layer described above, and shells 46 surrounding pores 45. The shells 46 are separated from each other in the insulating film 44. The pores 45 are surrounded by the shells 46. The shells 46 may be formed by decomposing and volatilizing a thermally decomposable resin in a varnish containing the core-shell particles described above, or may be hollow particles, that is, particles originally having a space within the shells 46 formed of a resin with a high thermal decomposition temperature. The core-shell particles may have some variations in particle size. Preferably, the coefficient of variation (CV) of the particle size of the core-shell particles is preferably 30% or less, more preferably 20% or less. The use of the core-shell particles having a particle size with CV smaller than or equal to the upper limit can reduce the decrease in insulating properties due to the electric charge concentration in the pores caused by a difference in pore size or can reduce the decrease in the strength of the insulating layer due to processing stress concentration. The term "CV", as used herein, refers to a variation variable specified by JIS-Z 8825 (2013).

Such a structure can prevent the pores 45 from communicating with each other and becoming larger than necessary and reduce variations in the size of the pores 45. Such a structure also makes it easy for the pores 45 to account for the above percentage of the polyimide layer. Because the pores 45 within the shells 46 have a predetermined volume, the amount of the shells 46 having the above structure in the polyimide layer can be changed to adjust the percentage of the pores 45 in the polyimide layer.

The shells 46 preferably have a higher elastic modulus than the polyimide. This can increase the hardness of the insulating film 44 including the shells 46 and reduce the decrease in the elastic modulus of the insulating film 44 itself including the shells 46 even at high temperatures.

Silicone can be suitably used as a specific material for the shells 46. The silicone is sil-sesqui-oxane, for example. Sil-sesqui-oxane is a siloxane compound having a main chain skeleton composed of a Si-O bond, represented by the composition formula [(RSiO_{1.5})ₙ].

In the embodiment, the insulating film may have a structure with more layers, that is, a structure with 3 or more layers.

### (Fifth Embodiment)

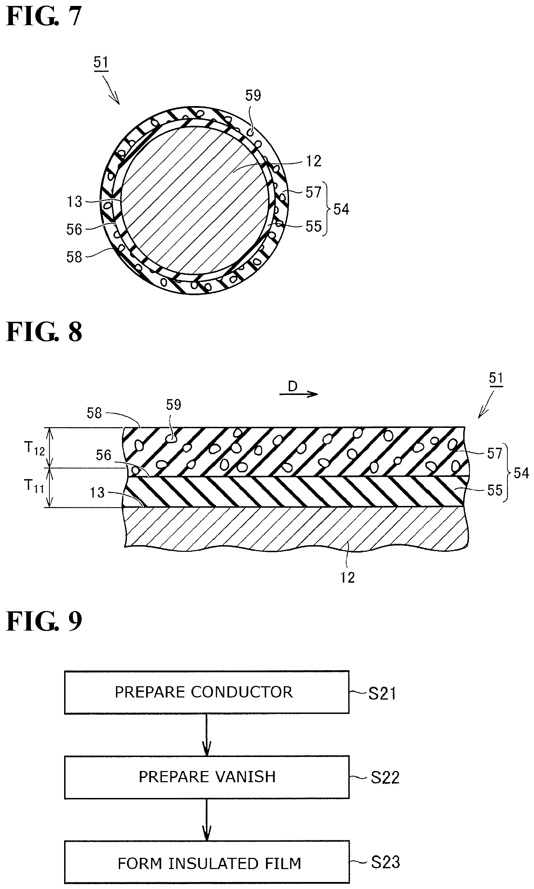

Next, another embodiment, a fifth embodiment, is described below with reference to Figures 7 and 8. Figures 7 and 8 are cross-sectional views of the structure of an insulated electric wire according to an embodiment of the present application. Figure 7 illustrates a cross-sectional view of a linear insulated electric wire perpendicular to the longitudinal direction. Figure 8 is a fragmentary cross-sectional view of a portion of a cross section of a linear insulated electric wire parallel to the longitudinal direction. In Figure 8, the arrow D indicates an orientation in the longitudinal direction.

In Figures 7 and 8, an insulated electric wire 51 includes a linear conductor 12 and an insulating film 54 disposed to surround the periphery 13 of the conductor 12.

For example, the conductor 12 is preferably formed of a metal with high electric conductivity and high mechanical strength. Examples of such a metal include copper, copper alloys, aluminum, aluminum alloys, nickel, silver, soft iron, steel, and stainless steel. The conductor 12 may be formed of a linearly formed material of one of these metals or a multilayer structure produced by covering such a linear material with another metal, for example, a nickel-coated copper wire, a silver-coated copper wire, a copper-coated aluminum wire, or a copper-coated steel wire.

The conductor 12 may have any diameter depending on the use. Although the conductor 12 and the insulated electric wire 11 have a circular cross-sectional shape in Figure 1, the conductor 12 and the insulated electric wire 11 may have any cross-sectional shape, provided that the conductor 12 is linear. For example, with respect to a cross section perpendicular to the longitudinal direction, the conductor 12 with a rectangular or polygonal cross-sectional shape may substitute for the linear conductor 12 with a circular cross-sectional shape.

The insulating film 54 is disposed to surround the periphery of the conductor 12. More specifically, the insulating film 54 is in contact with the periphery 13 of the conductor 12 and entirely covers the periphery 13 of the conductor 12. The insulating film 14 in Figure 8 can have a thickness Tn of 10 µm or more and 200 µm or less, for example.

The insulating film 54 has a two-layer structure and includes a first layer 55 that is in contact with the periphery 13 of the conductor 12 and that covers the periphery of the conductor 12 and a second layer 57 disposed to surround the periphery of the first layer 55. The second layer 57 is configured to be in contact with the periphery 56 of the first layer 55 and cover the periphery of the first layer 55. Thus, the insulated electric wire 11 includes, from the inner diameter side, the conductor 12, the first layer 55, and the second layer 57. The periphery 58 of the second layer 57, which is the outermost layer, is exposed to the air.

The first layer 55 contains a resin with a storage modulus E' of 200 MPa or more at 325°C. A resin constituting the first layer 55 is, but not limited to, at least one resin of poly ether ether ketone, polyamideimide, and polyimide having a molecular structure including the repeating unit A, for example. For example, the resin is a polyimide having a molecular structure including the repeating unit A represented by the formula (1). Thus, the resin constituting the first layer 55 may be a PMDA-ODA-type polyimide composed only of the repeating unit A. Such a resin can more certainly and more easily achieve the storage modulus E' of 200 MPa at 325°C as a resin constituting the first layer 55.

The resin constituting the first layer 55 preferably has a storage modulus E' of 20000 MPa (20 GPa) or less at 325°C. Such a resin can be used to maintain good bending workability required for the insulated electric wire 51.

A proper amount of so-called filler may be added to a resin constituting the first layer 55. The filler makes it easy to control the above storage modulus E' of the resin constituting the first layer 55. The filler may be a hollow filler within the bounds of not impairing the insulating properties.

The second layer 57 is formed of a polyimide having a molecular structure containing the repeating unit A represented by the formula (1) and the repeating unit B represented by the formula (2). The mole fraction [B x 100/(A + B)] (% by mole) represented by the percentage of the number of moles of the repeating unit B to the total number of moles of the repeating unit A and the repeating unit B in the molecular structure is 25% or more by mole and 95% or less by mole.

Hydrolysis of the polyimide is partly responsible for a fissure or crack in the insulating film 54. The repeating unit B content is preferably appropriately increased to improve the hydrolysis resistance of the polyimide. However, an excessive repeating unit B content results in cloudiness of the insulating film 54 and consequently cloudiness of the insulated electric wire 51. The insulated electric wire 51 requires a good appearance, such as an appearance without cloudiness. If the second layer 57 serving as the outermost layer constituting the insulating film 54 is formed of the polyimide, and the mole fraction is in the above range, then the insulating film 54 can have high hydrolysis resistance and a good appearance when exposed to a high temperature and high humidity environment for extended periods.

Such a structure can suppress bubbling in the resin with a storage modulus E' of 200 MPa or more at 325°C constituting the first layer 55 of the insulating film 54 located near the conductor 12 during welding and improve resistance to welding of the insulating film 54. When the second layer 57 of the insulating film 54 serving as the outermost layer disposed away from the conductor 12 has the above structure, the insulating film 54 can have high hydrolysis resistance and a good appearance when exposed to a high temperature and high humidity environment for extended periods. Thus, the insulated electric wire 51 including the insulating film 54 can prevent the function from being impaired.

Next, the steps in a method for producing the insulated electric wire 51 according to the present embodiment are described below with reference to Figures 7 to 9. Figure 9 is a flow chart of the steps in a process of producing the insulated electric wire 51 according to an embodiment of the present application. In the present embodiment, S21 (step S21, "step" is hereinafter omitted) to S23 in Figure 9 are performed.

First, the linear conductor 12 is prepared (S21). More specifically, a unit wire is prepared, and the unit wire is subjected to processing, such as drawing (wire drawing), to prepare the conductor 12 with a desired diameter and shape. The unit wire selected may be made of the material described in the first embodiment.

Next, a varnish containing a polyimide precursor poly(amic acid) (poly(amic acid) solution) is prepared (S22). Two varnishes are prepared: a varnish to form the first layer 55 (solid-layer-forming varnish) and a varnish to form the second layer 17 (porous-layer-forming varnish).

In the present embodiment, the solid-layer-forming varnish is the same as that described in the second embodiment. For example, the solid-layer-forming varnish is prepared from PMDA and ODA and forms a polyimide having a molecular structure containing the repeating unit A.

The porous-layer-forming varnish has the composition of the polyimide to form the second layer 57 such that the mole fraction (B x 100/(A + B)) represented by the percentage of the number of moles of the repeating unit B to the total number of moles of the repeating unit A represented by the formula (1) and the repeating unit B represented by the formula (2) is 25% or more by mole and 95% or less by mole. The porous-layer-forming varnish also contains a thermally decomposable resin to form pores in the second layer 57. For the types and amounts of raw materials to form the porous-layer-forming varnish and their preferred ranges, see the description of the porous-layer-forming varnish in the first embodiment.

In the solid-layer-forming varnish and the porous-layer-forming varnish, for example, the mole ratio (tetracarboxylic dianhydrides/diamine) of the tetracarboxylic dianhydrides (PMDA and BPDA) to the diamine (ODA) in the polyimide precursor can be 95/105 or more and 105/95 or less, from the perspective of ease with which the polyimide precursor can be synthesized. In the polyimide precursor for the solid-layer-forming varnish, the tetracarboxylic dianhydride is PMDA alone.

The weight-average molecular weight of each polyimide precursor preferably has a lower limit of 10,000, more preferably 15,000. The weight-average molecular weight preferably has an upper limit of 180,000, more preferably 130,000. The polyimide precursor with a weight-average molecular weight greater than or equal to the lower limit can form an extensible polyimide that can easily retain a constant molecular weight even after hydrolysis. Consequently, the flexibility and resistance to hygrothermal degradation of the insulating layer can be further improved. The polyimide precursors with a weight-average molecular weight smaller than or equal to the upper limit can suppress an extreme increase in the viscosity of a varnish for use in the production of the insulated electric wire 11 and improve the coating performance of the varnish on the conductor 12. Furthermore, the concentration of the polyimide precursor in the varnish can be easily increased while good coating performance is maintained. The term "weight-average molecular", as used herein, refers to the value measured by gel permeation chromatography (GPC) according to JIS-K725-1: 2008 "Plastics -Determination of average molecular mass and molecular mass distribution of polymers using size-exclusion chromatography - Part 1: General principles".

The polyimide precursors can be produced by a polymerization reaction between the tetracarboxylic dianhydride(s) and the diamine. The polymerization reaction can be performed by a known method for synthesizing a polyimide precursor. In the present embodiment, first, 100% by mole of the diamine ODA is dissolved in N-methyl-2-pyrrolidone (NMP). 95% by mole to 100% by mole of tetracarboxylic dianhydrides composed of PMDA and BPDA at a predetermined ratio are then added and stirred in a nitrogen atmosphere. For the porous-layer-forming varnish used to form the first layer 25, the percentage of BPDA is 0. The reaction is then performed at 80°C for 3 hours while stirring. After the reaction, the reaction solution is naturally cooled to room temperature. Thus, a varnish containing the polyimide precursor dissolved in N-methyl-2-pyrrolidone is prepared.

Although N-methyl-2-pyrrolidone (NMP) is used as an organic solvent in the embodiment, another aprotic polar organic solvent may also be used. Examples of the other aprotic polar organic solvent include N,N-dimethylformamide, N,N-dimethylacetamide, dimethyl sulfoxide, and γ-butyrolactone. These organic solvents may be used alone or in combination. The term "aprotic polar organic solvent", as used herein, refers to a polar organic solvent that has no proton-release group.

Any amount of the organic solvent may be used, provided that PMDA, BPDA, and ODA can be uniformly dispersed. For example, the amount of the organic solvent to be used may be 100 parts or more by mass and 1,000 parts or less by mass per 100 parts by mass of PMDA, BPDA, and ODA in total.

The polymerization reaction conditions may be appropriately determined depending on the raw materials to be used or the like. For example, the reaction temperature may be 10°C or more and 100°C or less, and the reaction time may be 0.5 hours or more and 24 hours or less.

The mole ratio (tetracarboxylic dianhydrides/diamine) of the tetracarboxylic dianhydrides (PMDA and BPDA) to the diamine (ODA) used in the polymerization is preferably closer to 100/100 in order to efficiently promote the polymerization reaction. For example, the mole ratio may be 95/105 or more and 105/95 or less.

The varnish may contain another component or additive agent in addition to the above components within the bounds of not reducing the above effects. For example, the varnish may contain various additive agents, such as a pigment, a dye, an inorganic or organic filler, a curing accelerator, a lubricant, an adhesion improver, and a stabilizer, and another compound, such as a reactive low-molecular-weight compound.

The insulating film 54 is then formed on the conductor 12 (S23). In the insulating film 54, first, the first layer 55 of the solid layer is formed to surround the periphery 13 of the linear conductor 12. The solid-layer-forming varnish prepared in S22 is applied to the surface of the conductor 12 to form a coating film on the periphery 13 of the conductor 12. The conductor 12 on which the coating film is formed is passed through a furnace heated to, for example, 350°C to 500°C for 20 seconds to 2 minutes, more specifically, for 30 seconds, for heating. Heating the coating film promotes imidization by dehydration of poly(amic acid), hardens the coating film, and forms the first layer 55 of the insulating film 54 of the polyimide on the periphery 13 of the conductor 12. A cycle of applying the solid-layer-forming varnish and heating the coating film is performed several times to increase the thickness of the second layer 57. Consequently, the first layer 55 with the desired T₁₁ can be formed.

The second layer 57 containing pores 59 is then formed such that the second layer 57 is in contact with and covers the periphery 56 of the first layer 55. In this case, the porous-layer-forming varnish is applied to the periphery 56 of the first layer 55 to form a coating film on the periphery 56 of the first layer 55. After the coating film is formed, the heating described above is performed to form the second layer 57. The cycle of applying the porous-layer-forming varnish and heating the coating film is performed several times to increase the thickness of the second layer 57. Consequently, the second layer 57 has a desired thickness T₂₂. In this manner, the insulated electric wire 51 is produced that includes the conductor 12 and the insulating film 54 (including the first layer 55 and the second layer 57) disposed to surround the periphery of the conductor 12.

In the embodiment, the insulating film 54 may have a structure with more layers, that is, a structure with 3 or more layers. In such a case, for example, the insulating film 54 may include a third layer between the first layer 55 and the second layer 57, the third layer being formed of a resin different from the resin constituting the first layer 55 and from the polyimide constituting the second layer 57. The insulating film 54 may also include a fourth layer to cover the periphery 58 of the second layer 57. The fourth layer is formed of a resin different from the polyimide constituting the second layer 57.

Although the resin constituting the first layer (solid layer) 55 is the polyimide having the molecular structure containing the repeating unit A in the embodiment, another resin may be used. For example, the resin constituting the first layer 55 may be poly ether ether ketone or polyamideimide. More specifically, the resin constituting the first layer 55 may contain at least one of polyimide having the molecular structure containing the repeating unit A, poly ether ether ketone (PEEK), and polyamideimide (PAI). The resin constituting the first layer 55 may be such a resin. In such a case, for example, the storage modulus E' at 325°C in the above range, that is, of 200 MPa or more can be achieved by the addition of clay or the like.

The resin constituting the first layer 55 preferably has a storage modulus E' of 20000 MPa or less at 325°C. This can maintain good bending workability required for the insulated electric wire 51.

The second layer 57 may have a thickness of 20 µm or more. More specifically, the thickness of the second layer 57, which is the thickness T₁₂ in Figure 2, in the radial direction from the periphery 56 of the first layer 55 to the periphery 58 of the second layer 57 may be 20 µm or more. Being such a thickness can ensure the thickness of the second layer 57 located on the periphery of the first layer 55, minimize damage to the first layer 55 from hydrolysis, and prevent cracking starting from the first layer 55.

### EXAMPLES

The invention according to the present disclosure is more specifically described in the following examples. However, the present disclosure is not limited to these examples. In the examples, insulated electric wires were produced by the following methods. Among the components used in the examples, components represented by the abbreviations have the following formal names.

### (acid anhydride component)

PMDA: pyromellitic dianhydride
BPDA: 3,3',4,4'-biphenyltetracarboxylic dianhydride

### (diamine component)

ODA: 4,4'-diaminodiphenyl ether (4,4'-oxydianiline, 4,4'-ODA)

The insulated electric wires were tested by the following procedures.

### (Evaluation of Resistance to Hygrothermal Degradation)

Resistance to hygrothermal degradation was evaluated as described below. First, the insulated electric wires were preliminarily elongated to 110% of the original length with a tensile tester ("AG-IS" manufactured by Shimadzu Corporation) at a crosshead speed of 10 mm/min. The preliminarily elongated insulated electric wires were exposed at a temperature of 85°C and at a humidity of 95% for 750 hours. Subsequently, the surface of each insulated electric wire was visually inspected for cracking. In Tables 1 and 2, insulated electric wires with a crack were rated as C, and insulated electric wires with no crack were rated as A.

### (Evaluation of Resistance to Welding)

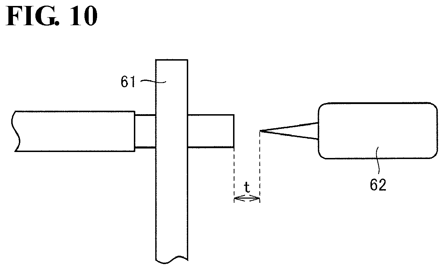

Resistance to welding 1 and resistance to welding 2 were evaluated as described below. Figure 10 is a schematic view of a method for evaluating resistance to welding. An insulated electric wire was cut into a test specimen 100 mm in length. An insulating layer was peeled 7.0 mm from an end of the test specimen. A portion separated by 2.5 mm from the end from which the insulating layer was peeled was put between two chromium copper ground bars 61 with cross-sectional dimensions of 1.5 mm x 2.0 mm. The tip of a welding torch 62 was placed at a position separated by 1.25 mm from the end of the test specimen (a position at which the distance t from the end of the test specimen to the tip of the welding torch 62 in Figure 10 was 1.25 mm). Electricity was turned on with a TIG welding machine. The weld time was 0.3 seconds. In the welding conditions for resistance to welding 1, the current for welding was set at 110 A. In the welding conditions for resistance to welding 2, the current for welding was set at 130 A. The presence of bubbling in an insulating layer near the weld was checked under these conditions. Bubbling visually observed in the insulating layer near the weld was rated as "C (not good)", bubbling in the insulating layer near the weld observed with an optical microscope at a magnification of 20 times was rated as "B (usable)", and no bubbling observed was rated as "A (good)". Welding was performed at a temperature of 24°C and at a humidity of 45%.

### (Evaluation of Bending Workability)

Bending workability was evaluated as described below. An insulated electric wire was bent 90 degrees and was held for 10 seconds. The bent portion of the insulating layer was visually inspected for cracking. The bending workability of the insulating layer was rated as "A (good)" when no crack was observed and as "C (not good)" when a crack was observed.

### (Appearance)

Appearance was evaluated as described below. The appearance of an insulating layer of an insulated electric wire was visually inspected for cloudiness and color variability. The presence of cloudiness or color variability was rated as "C (not good)", and the presence of no cloudiness or color variability was rated as "A (good)".

### (First Evaluation Example)

### (Preparation of Varnish)

100% by mole of ODA was dissolved in an organic solvent N-methyl-2-pyrrolidone. PMDA and BPDA were then added to the solution at a mole ratio listed in Table 1. The solution was stirred in a nitrogen atmosphere. A reaction was then performed at 80°C for 3 hours while stirring. The solution was then cooled to room temperature. Thus, a varnish containing a polyimide precursor dissolved in N-methyl-2-pyrrolidone was prepared. The concentration of the polyimide precursor in the varnish was 30% by mass. The varnish contained a thermally decomposable resin or core-shell particles. In Table 1, the percentage of pores is indicated by porosity (% by volume), which refers to the ratio of the total volume of pores in a porous layer to the volume of the entire porous layer.

**[Table 1]**

| Experiment No. | | 1 | 2 | 3 | 4 | 5 | 6 | 7 | 8 | 9 | 10 |
|---|---|---|---|---|---|---|---|---|---|---|---|
| Acid (mole ratio) | PMDA | 100 | 70 | 30 | 10 | 0 | 30 | 30 | 30 | 30 | 30 |
| | BPDA | 0 | 30 | 70 | 90 | 100 | 70 | 70 | 70 | 70 | 70 |
| Diamine (mole ratio) | ODA | 100 | 100 | 100 | 100 | 100 | 100 | 100 | 100 | 100 | 100 |
| Porosity (vol%) | | 0 | 0 | 0 | 0 | 0 | 10 | 30 | 30 | 70 | 85 |
| Presence of shell | | - | - | - | - | - | No | No | Yes | No | No |
| Resistance to hygrothermal degradation | | C | A | A | A | A | A | A | A | A | A |
| Resistance to welding 1 | | A | C | C | C | C | A | A | A | A | A |
| Resistance to welding 2 | | A | C | C | C | C | B | B | A | A | A |
| Bending workability | | A | A | A | A | A | A | A | A | A | C |
| Appearance | | A | A | A | A | C | A | A | A | A | A |

### (Production of Insulated electric wire)

A round wire with an average diameter of 1 mm composed of copper (a conducting wire in which a conductor had a circular cross section perpendicular to the longitudinal direction) was prepared as a conductor. The varnish prepared as described above was applied to the periphery of the conductor. The conductor to which the varnish was applied was heated in a furnace at a heating temperature of 400°C for a heating time of 30 seconds. The coating step and heating step were performed 10 times. Thus, an insulated electric wire was prepared that included the conductor and an insulating film with an average thickness of 35 µm formed on the periphery of the conductor.

In Table 1, experiments No. 6, No. 7, No. 8, and No. 9 show the results for examples, and experiment No. 1, No. 2, No. 3, No. 4, No. 5, and No. 10 show the results for comparative examples.

Table 1 shows that the experiments No. 5 to No. 9, which satisfied the conditions that the mole fraction represented by the percentage of the number of moles of the repeating unit B to the total number of moles of the repeating unit A and the repeating unit B is 25% or more by mole and 95% or less by mole and that the pores occupy 5% or more by volume and 80% or less by volume of the polyimide layer, had good resistance to hygrothermal degradation and satisfactory resistance to welding 1 and resistance to welding 2. In particular, the experiment No. 8, which had a shell and a pore percentage of 30%, and the experiment No. 9, which had a pore percentage of 70%, had high resistance to welding 1 and resistance to welding 2.

In contrast, the experiment No. 1, which contained no BPDA, had a crack related to resistance to hygrothermal degradation, and had insufficient resistance to hygrothermal degradation. The experiments No. 2, No. 3, No. 4, and No. 5, which had no pores in the polyimide layer, had insufficient resistance to welding 1 and resistance to welding 2. In particular, the experiment No. 5 also had a poor appearance. The experiment No. 10, which had a pore percentage of more than 80% by volume, had insufficient bending workability.

### (Second Evaluation Example)

### (Preparation of Varnish)

### (i) Preparation of Solid-Layer-Forming Varnish (Varnish for First Layer)

100% by mole of ODA was dissolved in an organic solvent N-methyl-2-pyrrolidone. PMDA and BPDA were then added to the solution at a mole ratio listed in Table 2. The solution was stirred in a nitrogen atmosphere. A reaction was then performed at 80°C for 3 hours while stirring. The solution was then cooled to room temperature. Thus, a varnish for a first layer and a varnish for a second layer each containing a polyimide precursor dissolved in N-methyl-2-pyrrolidone were prepared. The concentration of the polyimide precursor in each varnish was 30% by mass.

### (ii) Preparation of Porous-Layer-Forming Varnish (Varnish for Second Layer)

100% by mole of ODA was dissolved in an organic solvent N-methyl-2-pyrrolidone. PMDA and BPDA were then added to the solution at a mole ratio listed in Table 2. The solution was stirred in a nitrogen atmosphere. A reaction was then performed at 80°C for 3 hours while stirring. The solution was then cooled to room temperature. Thus, a varnish containing a polyimide precursor dissolved in N-methyl-2-pyrrolidone was prepared. The concentration of the polyimide precursor in the varnish was 30% by mass. The varnish contains a thermally decomposable resin.

### (Production of Insulated electric wire)

A rectangular copper wire composed mainly of copper (a copper wire in which a conductor had a tetragonal cross section 1.5 mm in height and 4 mm in width perpendicular to the longitudinal direction) was prepared as a conductor. The solid-layer-forming varnish (varnish for a first layer) prepared as described above was applied to the periphery of the conductor. The coating film was heated in a furnace at a heating temperature of 400°C for a heating time of 30 seconds. The coating step and heating step were performed 30 times.

The surface of the first layer was thoroughly dried and hardened, and the porous-layer-forming varnish (varnish for a second layer) was applied to the periphery of the first layer. The coating film was heated in a furnace at a heating temperature of 400°C for a heating time of 30 seconds. The coating step and heating step were performed 30 times.

Thus, an insulated electric wire was prepared that included the conductor and an insulating film with an average thickness (an average total thickness of the first layer and the second layer) of approximately 200 µm formed on the periphery of the conductor.

### (Evaluation of Insulated electric wire)

The insulated electric wire thus prepared was evaluated in terms of resistance to hygrothermal degradation, resistance to welding (the conditions for "resistance to welding 2"), and appearance. Tables 2 and 3 show the results.

In Tables 2 and 3, the percentage of pores in the second layer is indicated by porosity (% by volume), which refers to the ratio of the total volume of pores in the second layer to the volume of the entire second layer. Table 2 shows the evaluation results for the porosity of 5% by volume, and Table 3 shows the evaluation results for the porosity of 80% by volume.

In Tables 2 and 3, experiments No. 12, No. 13, No. 14, No. 16, No. 17, No. 20, No. 22, No. 23, No. 24, No. 26, No. 27, and No. 29 show the results for examples, and experiments No. 11, No. 15, No. 18, No. 19, No. 21, No. 25, and No. 28 show the results for comparative examples. The experiments No. 18 and No. 28 include a polyesterimide (PEsI) layer as the first layer.

In the experiments No. 11 to No. 18 and experiments No. 21 to No. 28, each of the first layer and the second layer has a thickness of 100 µm. In the experiment No. 19, the first layer is the same as the second layer. More specifically, in the experiment No. 19, the insulating film is monolayer and has a total thickness of 200 µm. In the experiments No. 20 and No. 29, the first layer has a thickness of 178 µm, and the second layer has a thickness of 18 µm.

**[Table 2]**

| | Experiment No. | | 11 | 12 | 13 | 14 | 15 | 16 | 17 | 18 | 19 | 20 |
|---|---|---|---|---|---|---|---|---|---|---|---|---|
| Second layer | Acid (mole ratio) | PMDA | 100 | 70 | 30 | 10 | 0 | 30 | 30 | 30 | 30 | 70 |
| | | BPDA | 0 | 30 | 70 | 90 | 100 | 70 | 70 | 70 | 70 | 30 |
| | Diamine (mole ratio) | ODA | 100 | 100 | 100 | 100 | 100 | 100 | 100 | 100 | 100 | 100 |
| | Porosity (vol%) | | 5 | 5 | 5 | 5 | 5 | 5 | 5 | 5 | 0 | 5 |
| First layer | Resin | | PMDA: ODA=100:100 | PMDA: ODA=100:100 | PMDA: ODA=100:100 | PMDA: ODA=100:100 | PMDA: ODA=100:100 | PEEK+ Clay (30phr) | PAI+ Clay (30phr) | PEsI | - 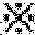 | PMDA: ODA=100:100 |
| | Storage modulus E' (325°C)(MPa) | | 850 | 850 | 850 | 850 | 850 | 220 | 250 | < 1 | 110 | 850 |
| Thickness of first layer (µm) /thickness of second layer (µm) | | | 100/100 | 100/100 | 100/100 | 100/100 | 100/100 | 100/100 | 100/100 | 100/100 | 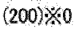 | 178/18 |
| Resistance to hygrothermal degradation | | | C | A | A | A | A | A | A | A | A | B |
| Resistance to welding | | | A | A | A | A | A | A | A | C | C | A |
| Appearance | | | A | A | A | A | G | A | A | A | C | A |

| | | | | | | | | | | | | |
|---|---|---|---|---|---|---|---|---|---|---|---|---|
| * Monolayer; therefore, the first layer is not distinguished from the second layer. | | | | | | | | | | | | |

**[Table 3]**

| | Experiment No. | | 21 | 22 | 23 | 24 | 25 | 26 | 27 | 28 | 29 |
|---|---|---|---|---|---|---|---|---|---|---|---|
| Second layer | Acid (mole ratio) | PMDA | 100 | 70 | 30 | 10 | 0 | 30 | 30 | 30 | 70 |
| | | BPDA | 0 | 30 | 70 | 90 | 100 | 70 | 70 | 70 | 30 |
| | Diamine (mole ratio) | ODA | too | 100 | 100 | 100 | 100 | 100 | 100 | 100 | 100 |
| | Porosity (vol%) | | 80 | 80 | 80 | 80 | 80 | 80 | 80 | 80 | 80 |
| First layer | Resin | | PMDA: ODA=100:100 | PMDA: ODA=100:100 | PMDA: ODA=100:100 | PMDA: ODA=100:100 | PMDA: ODA=100:100 | PEEK+ Clay (30phr) | PAI+ Clay (30phr) | PEsI | PMDA: ODA=100:100 |
| | Storage modulus E' (325°C)(MPa) | | 850 | 850 | 850 | 850 | 850 | 220 | 250 | < 1 | 850 |
| Thickness of first layer (µm) /thickness of second layer (µm) | | | 100/100 | 100/100 | 100/100 | 100/100 | 100/100 | 100/100 | 100/100 | 100/100 | 178/18 |
| Resistance to hygrothermal degradation | | | C | A | A | A | A | A | A | A | B |
| Resistance to welding | | | A | A | A | A | A | A | A | C | A |
| Appearance | | | A | A | A | A | C | A | A | A | A |

In Tables 2 and 3, the experiments No. 12 to No. 14, No. 16, No. 17, No. 22 to No. 24, No. 26, and No. 27 are part of examples. In the insulating film of the insulated electric wire in these examples, the first layer is a layer that contains a resin with a storage modulus E' of 200 MPa or more at 325°C. The second layer is a layer formed of a polyimide in which the mole fraction represented by the percentage of the number of moles of the repeating unit B to the total number of moles of the repeating unit A and the repeating unit B is 25% or more by mole and 95% or less by mole. The second layer has a plurality of pores (voids), and the percentage of pores (porosity) is 5% by volume (experiments No. 12 to No. 14, No. 16, and No. 17) or 80% by volume (experiments No. 22 to No. 24, No. 26, and No. 27). These insulated electric wires had good results with respect to resistance to hygrothermal degradation and also had satisfactory results with respect to resistance to welding and appearance. The experiments No. 20 and No. 29 are also part of examples but have slightly lower resistance to hygrothermal degradation than the other examples. More specifically, although the resistance to welding and appearance results are also satisfactory, these experiments are only at the usable level with respect to resistance to hygrothermal degradation. This is probably because the second layer is 18 µm, that is, 20 µm or less.

In contrast, the experiments No. 11 and No. 21, which contained no BPDA in the second layer, had a crack in the insulating film during the evaluation of resistance to hygrothermal degradation and had insufficient resistance to hygrothermal degradation. The experiments No. 15 and No. 25, which contained 100% of BPDA in the second layer, had an unsatisfactory appearance. As shown in the experiments No. 18 and No. 28, insulated electric wires including an insulating film including the first layer formed of a resin with a storage modulus E' of less than 200 MPa at 325°C had insufficient resistance to welding. As shown in the experiment No. 19, the insulated electric wire including an insulating film without a layer having pores also had insufficient resistance to welding.

### (Summary)

An insulated electric wire according to the present disclosure includes an insulating film that includes a polyimide layer formed of a polyimide that has a molecular structure including the repeating unit A represented by the formula (1) and the repeating unit B represented by the formula (2), the mole fraction [B x 100/(A + B)] (% by mole) represented by the percentage of the number of moles of the repeating unit B to the total number of moles of the repeating unit A and the repeating unit B being 25% or more by mole and 95% or less by mole. The polyimide layer has a plurality of pores. The pores occupy 5% or more by volume and 80% or less by volume of the polyimide layer.

As shown in the examples, such an insulating film satisfies the characteristics required for insulating films, such as resistance to hygrothermal degradation, resistance to welding, and appearance. Thus, an insulated electric wire that can prevent the function from being impaired can be provided.

It is to be understood that the embodiments disclosed herein are illustrated by way of example and not by way of limitation in all respects. The scope of the present invention is defined by the appended claims rather than by the description preceding them. All modifications that fall within the scope of the claims and the equivalents thereof are therefore intended to be embraced by the claims.

### Reference Signs List

- 11, 21, 31, 41, 51: insulated electric wire
- 12: conductor
- 13, 26, 28, 36, 38, 58: surface
- 14, 24, 34, 44, 54: insulating film
- 15, 29, 39, 45, 59: pore
- 17, 27, 37, 57: second layer
- 25, 35, 55: first layer
- 46: shell
- 61: ground bar
- 62: welding torch

## Claims

1. An insulated electric wire comprising:
a linear conductor; and
an insulating film disposed to surround the periphery of the conductor,
wherein the insulating film includes a polyimide layer formed of a polyimide that has a molecular structure including a repeating unit A represented by the following formula (1) and 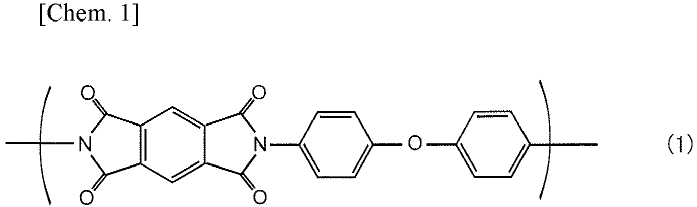
a repeating unit B represented by the following formula (2), and 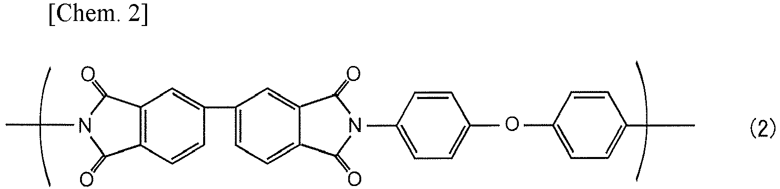
the mole fraction (B x 100/(A + B)) represented by the percentage of the number of moles of the repeating unit B to the total number of moles of the repeating unit A and the repeating unit B is 25% or more by mole and 95% or less by mole,
the polyimide layer has a plurality of pores, and
the pores occupy 5% or more by volume and 80% or less by volume of the polyimide layer.

2. The insulated electric wire according to Claim 1, further comprising
a shell surrounding the pores.

3. The insulated electric wire according to Claim 2, wherein
the shell has a higher elastic modulus than the polyimide.

4. The insulated electric wire according to any one of Claims 1 to 3, wherein
the insulating film includes a first layer that is in contact with the periphery of the conductor and that covers the periphery of the conductor,
the polyimide layer constitutes a second layer disposed to surround the periphery of the first layer, and
the first layer contains a resin with a storage modulus E' of 200 MPa or more at 325°C.

5. The insulated electric wire according to any one of Claims 1 to 4, wherein
the resin in the first layer contains at least one of poly ether ether ketone, polyamideimide, and polyimide having a molecular structure including the repeating unit A.

6. The insulated electric wire according to any one of Claims 1 to 5, wherein
the second layer has a thickness of 20 µm or more.

7. The insulated electric wire according to any one of Claims 1 to 6, wherein
the resin in the first layer has a storage modulus E' of 20000 MPa or less at 325°C.
